# EUROPÄISCHE PATENTSCHRIFT

(11) **EP 2 570 711 B1**
(45) Veröffentlichungstag und Bekanntmachung des Hinweises auf die Patenterteilung: **25.10.2017**
(21) Anmeldenummer: 12005691.6
(22) Anmeldetag: 04.08.2012
(51) Int. Cl.: F16B 35/00, F16L 55/027, F16K 3/02

(54) **Kupplungshälfte für Schlauch und Rohrleitungen**
Coupling half for hose and pipes
Demi-accouplement pour flexibles et conduites

(30) Priorität: 16.09.2011 DE 202011105787 U
(43) Veröffentlichungstag der Anmeldung: 20.03.2013
(73) Patentinhaber: AWG Fittings GmbH, 89537 Giengen/Brenz (DE)
(72) Erfinder: Unrath, Wilfried, 89547 Gerstetten (DE)
(74) Vertreter: Dr. Weitzel & Partner

(56) Entgegenhaltungen:
- DE-A1- 19 830 682
- DE-U1- 8 319 411
- DE-U1-202010 015 177
- US-A- 600 181
- US-A- 2 601 231
- US-A- 3 312 241
- US-A- 3 517 697
- US-A- 5 227 062

## Beschreibung

Die Erfindung betrifft eine Kupplungshälfte für Schlauch und Rohrleitungen, insbesondere für Feuerwehrzwecke.

Das in Europa am weitesten verbreitete Kupplungssystem im Feuerwehrwesen ist das System "Storz", bei dem zwei miteinander zu verbindende Schlauchenden über Kupplungshälften verfügen, die symmetrisch zueinander sind. Die Kupplungshälften weisen Knaggenringe auf, die gegenüber den jeweils zugeordneten Schlauchstutzen drehbar sind und deren Knaggen mit eine Steigung aufweisenden Leisten des Knaggenringes der jeweils anderen Kupplungshälfte bajonettverschlussartig in Eingriff gebracht werden können. Die Drehung der Knaggenringe bewirkt eine axiale Annäherung der Schlauchstutzen, sodass in deren Stirnseiten angeordnete Dichtungsringe ohne gegenseitige Drehung axial gegeneinander gepresst werden. Für den Anschluss solcher Schläuche an feste Rohrleitungen, Armaturen oder stationäre Feuerlöschanlagen sind nicht drehbare, aber dennoch Storz-kompatible Festkupplungshälften vorgesehen.

Bei stationären Feuerlöschanlagen, wie etwa einem Wandhydranten, werden am Eingang der Schlauchhaspel Schlauchanschlussventile gemäß der Norm DIN 14461-3 eingesetzt. Ein solches Ventil dient im Brandfall als Schalter mit den 20 Funktionen AUF und ZU. Nach dem Öffnen wird im Ventil sofort ein Durchflussquerschnitt frei, der größer ist als die Bohrung der Düse am endseitigen Strahlrohraustritt.

Die Eingangsdrücke, mit denen die Wandhydranten über die bauseitigen Versorgungsleitungen gespeist werden, sind nicht einheitlich. Die Ursachen für die unterschiedlichen Eingangsdrücke sind die teilweise grundlegend verschiedenen Drücke in den Trinkwasserleitungen oder auch Unterschiede in den geodätischen Höhen (bei Hochhäusern). Dies führt zu unterschiedlichen Durchflussmengen am Strahlrohr und dadurch bedingt zu unterschiedlichen Wurfweiten und Rückstoßkräften, die auf den Bediener wirken, der ein Feuerwehrmann, eine unterwiesene Person oder auch ein Laie sein kann.

Gemäß der Norm DIN 14462 sind zwei Wandhydranten spezifiziert, die zwar äußerlich ähnlich, jedoch mit verschiedenen Schläuchen und Strahlrohren ausgestattet sind und verschiedene Durchflussmengen aufweisen. Für die zwei Wandhydranttypen sind in der Norm unterschiedliche hydraulische DrucklDurchflussWertepaare vorgegeben. Um die in der Norm angegebenen Wertepaare in einem Gebäude einhalten zu können, in dem unter Umständen viele Wandhydranten über eine einzige Versorgungsleitung gespeist werden, sind bisher drei technische Lösungen bekannt, die jedoch alle mit Nachteilen verbunden sind: Es werden teure und komplexe Druckminderer mit einer auf eine Membran einwirkenden Feder eingebaut, die störanfällig sind, insbesondere wenn der Wandhydrant naturgemäß längere Zeit nicht genutzt wurde. Alternativ werden Eigenmedium-gesteuerte Membranregelventile mit einem funktionsspezifischen Steuerpiloten eingesetzt, die ebenfalls sehr aufwändig sind. Die einfachste Lösung ist der Einbau ringförmiger Blenden in die Storz-Kupplungen zwischen Schlauchanschlussventil und Schlauchhaspel. Eine Blende legt jedoch genau einen diskreten Durchflussquerschnitt fest, das heißt eine kontinuierliche und damit exakte Einstellmöglichkeit während des Mediumdurchflusses ist nicht gegeben. Das Dokument DE202010015177U offenbart eine bekannte Feuerlösch-Schlauchanschlusseinrichtung. Aufgabe der Erfindung ist es, eine verbesserte Druckregulierung in Löschwasserleitungen zu ermöglichen.

Gelöst wird diese Aufgabe durch eine Kupplungshälfte mit den Merkmalen des Anspruchs 1. Vorteilhafte und zweckmäßige Ausgestaltungen der erfindungsgemäßen Kupplungshälfte sind in den Unteransprüchen angegeben. Die erfindungsgemäße Kupplungshälfte für Schlauch und Rohrleitungen, insbesondere für Feuerwehrzwecke, umfasst eine integrierte Steuervorrichtung zur Einstellung des Durchflussquerschnitts der Kupplungshälfte auf mehrere stabile Zwischenwerte zwischen einem minimalen und einem maximalen Durchflussquerschnitt. Die Erfindung beruht auf der Erkenntnis, dass eine Veränderung des Durchflussquerschnitts in Rohr und Schlauchleitungen nicht ausschließlich durch technisch aufwändige und kostspielige zusätzliche Vorrichtungen oder durch in der Variabilität stark limitierte Maßnahmen erreicht werden kann. Vielmehr wurde überraschend erkannt, dass eine Steuervorrichtung zur Einstellung des Durchflussquerschnitts in eine ohnehin zwangsweise zum Anschluss des benötigten Schlauches erforderliche (Fest-)Kupplungshälfte eingebaut werden kann. Dies hat den Vorteil, dass keine zusätzlichen, möglicherweise nur schwer zugängliche Vorrichtungen in den speisenden Rohrleitungen vorgesehen werden müssen. Ein weiterer Vorteil besteht darin, dass die Steuervorrichtung grundsätzlich beliebig viele Einstellmöglichkeiten für den Durchflussquerschnitt bietet, sodass eine individuelle, bedarfsgerechte Einstellung möglich ist.

Für die praktische Umsetzung der Erfindung ist ein Aufbau wünschenswert, bei dem eine Storz-kompatible Kupplungshälfte für den Einbau der Steuervorrichtung nur geringfügig modifiziert werden muss, ohne dass die Funktionalität der Kupplungshälfte im Hinblick auf das Ankuppeln eines Schlauches durch die Steuervorrichtung beeinträchtigt ist. Gemäß der Erfindung weist die Steuervorrichtung ein erstes Steuerelement, in Form einer Steuerplatte, mit wenigstens einer Durchflussöffnung und ein dem ersten Steuerelement gegenüberliegendes zweites Steuerelement, in Form eines Steuerschiebers, mit wenigstens einer Steueröffnung auf. Dabei ist das zweite Steuerelement relativ zum ersten Steuerelement mittels einer Verstelleinrichtung so verschiebbar, dass sich durch das Verschieben die Lage der Steueröffnung relativ zur Durchflussöffnung ändert. Zwei oder mehrere gegeneinander verschiebbare Durchfluss- beziehungsweise Steueröffnungen erlauben auf einfache Weise eine Veränderung des Durchflussquerschnitts nach Art einer Blende. Die Ausbildung der relativ zueinander verschiebbaren Steuerelemente sieht vor, dass das erste Steuerelement und/oder das zweite Steuerelement mehrere Durchflussöffnungen bzw. Steueröffnungen aufweisen, die als parallel angeordnete Langlöcher ausgebildet sind. Vor allem dann, wenn beide Steuerelemente mit parallelen, identisch oder ähnlich angeordneten Langlöchern ausgestattet sind, lassen sich diese bereits durch eine geringfügige relative Verschiebung senkrecht zu deren Längsrichtung freigeben beziehungsweise verschließen.

Für eine genaue und reproduzierbare Verschiebung des zweiten Steuerelements ist eine Ausführung vorteilhaft, bei der die Verstelleinrichtung eine im Wesentlichen lineare Führung für das zweite Steuerelement aufweist.

Eine solche Führung kann auf einfache Art durch einen feststehenden Stift gebildet sein, der in eine erste Bohrung des zweiten Steuerelements hineinragt und mit dieser ein Gleitlager bildet.

Um eine wiederholte Einstellung des Durchflussquerschnitts, bestenfalls auch während des Betriebs der zugehörigen Anlage (Wandhydrant o. ä.), zu ermöglichen, sollte die Verstelleinrichtung von außen bedienbar sein. Vorzugsweise weist die Verstelleinrichtung deshalb ein von außen zugängliches Verstellorgan auf, das in Wirkverbindung mit dem zweiten Steuerelement steht. Ein Abkuppeln des Schlauchs ist in diesem Fall nicht notwendig.

Als Verstellorgan eignet sich insbesondere ein drehbar gelagerter Stift mit einem Gewinde, das in Eingriff mit einem Gewinde des zweiten Steuerelements steht.

Wenn sichergestellt ist, dass sich das zweite Steuerelement nicht um die Achse des Gewindestifts drehen kann, wird die Drehbewegung des Stifts in eine lineare Verschiebung des zweiten Steuerelements umgewandelt. Die Gewindesteigung (Ganghöhe) bestimmt, wie fein das zweite Steuerelement verstellt werden kann.

Das Gewinde des zweiten Steuerelements kann beispielsweise in einer zweiten Bohrung des zweiten Steuerelements gebildet sein.

Ein einfacher und effektiver Aufbau der Verstellvorrichtung ergibt sich in diesem Fall für eine Bohrungsanordnung des zweiten Steuerelements, gemäß der sich die erste Bohrung für das Führungselement und die zweite Bohrung für das Stellelement diametral gegenüberliegen.

Für eine korrekte Funktionsweise und unveränderte Zugänglichkeit sollte das Verstellorgan trotz der Drehung seines Gewindes, das mit dem Gewinde des zweiten Steuerelements in Eingriff steht, seine axiale Lage beibehalten. Hierfür kann das Verstellorgan mit einem radial abstehenden Bund ausgestattet sein, mit dem sich das Verstellorgan an einem Absatz der Kupplungshälfte axial abstützt.

Damit das Verstellorgan auch nicht versehentlich nach außen rutschen kann, ist eine Ausführung der Verstelleinrichtung vorteilhaft, bei der das Verstellorgan durch ein Konterelement an der Kupplungshälfte gesichert ist.

Wenn das Verstellorgan durch ein Konterelement gesichert ist, muss weiterhin gewährleistet sein, dass das Verstellorgan zur Bedienung der erfindungsgemäß vorgesehenen Steuervorrichtung erreichbar ist. Damit das Konterelement nicht jedes Mal abgenommen werden muss, sieht eine besondere Gestaltung vor, dass das Konterelement eine Öffnung aufweist, durch die das Verstellorgan für ein Werkzeug zum Drehen des Verstellorgans zugänglich ist.

Besonders effektiv wird diese Gestaltung dadurch, dass das Konterelement ein Gewinde aufweist und die Öffnung des Konterelements als Aufnahme für einen Innenmehrkantschlüssel ausgebildet ist. So kann durch die Öffnung zum einen das Verstellorgan bedient werden, zum anderen kann das Konterelement mit einem gängigen Werkzeug auf komfortable Weise eingeschraubt werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1: eine teilweise geschnittene Seitenansicht einer erfindungsgemäßen Kupplungshälfte in einer ersten Einstellung;
- Figur 2: eine perspektivische Vorderansicht der Kupplungshälfte aus Figur 1;
- Figur 3: eine perspektivische Rückansicht der Kupplungshälfte aus Figur 1;
- Figur 4: eine Schnittansicht der erfindungsgemäßen Kupplungshälfte aus Figur 1 in einer zweiten Einstellung;
- Figur 5: eine perspektivische Vorderansicht der Kupplungshälfte aus Figur 4;
- Figur 6: eine perspektivische Rückansicht der Kupplungshälfte aus Figur 4;
- Figur 7: eine perspektivische Ansicht einer Steuerplatte;
- Figur 8: eine perspektivische Ansicht eines Steuerschiebers;
- Figur 9: eine perspektivische Ansicht eines Führungselements;
- Figur 10: eine perspektivische Ansicht eines Verstellorgans; und
- Figur 11: eine perspektivische Darstellung eines Konterelements.

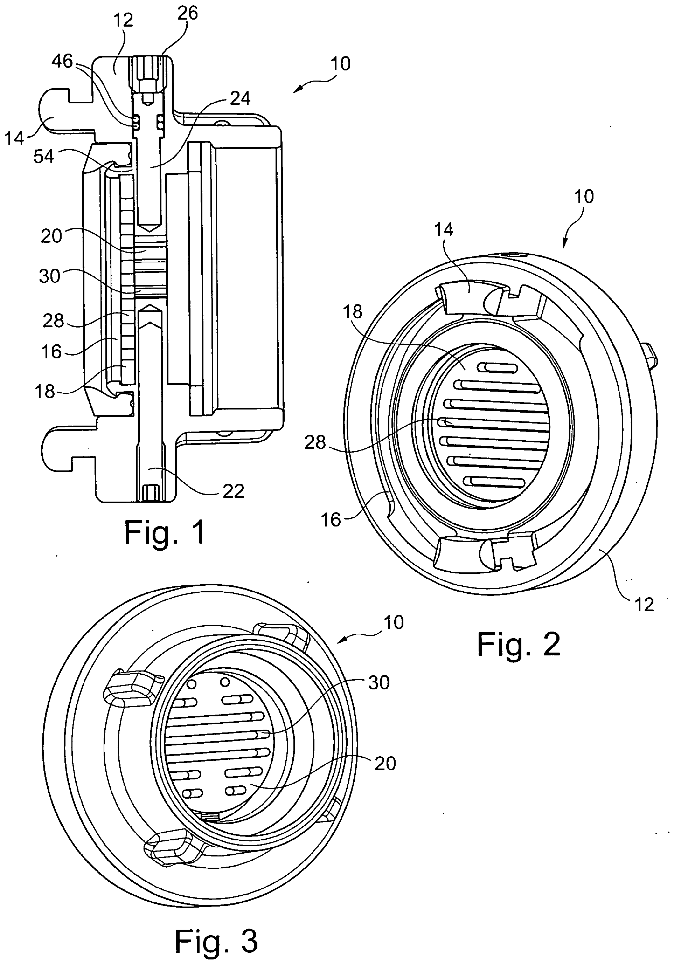

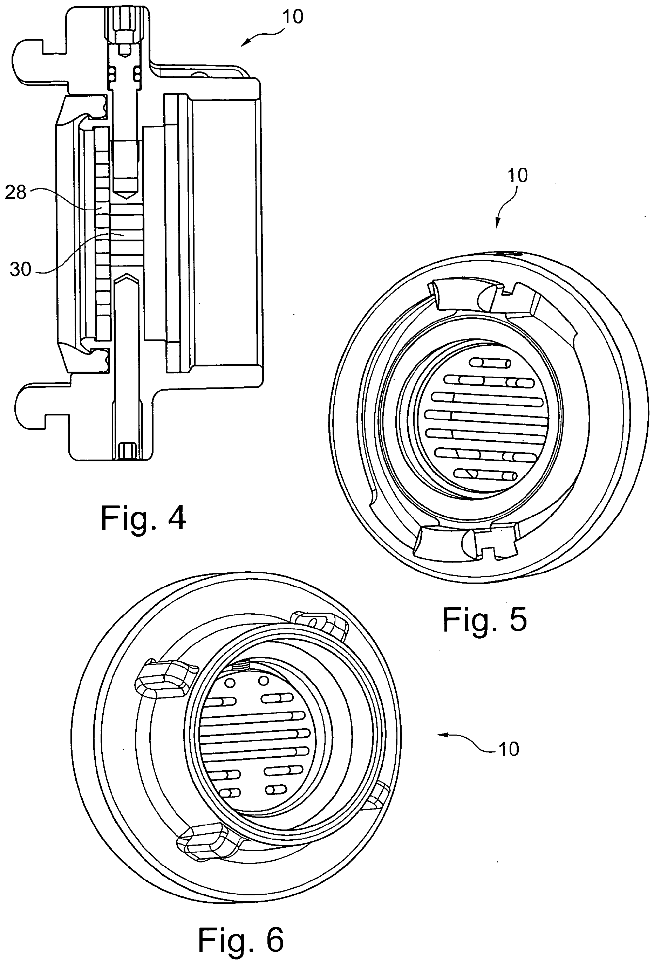

In den Figuren 1 bis 3 ist eine Kupplungshälfte 10 einer Kupplung für Schlauch und Rohrleitungen, genauer gesagt eine zum System "Storz" kompatible Festkupplungshälfte, in einer ersten Stellung dargestellt. Dieselbe Kupplungshälfte ist in den Figuren 4 bis 6 in einer zweiten Stellung dargestellt. Auf die unterschiedlichen Stellungen wird später noch genauer eingegangen.

Die Kupplungshälfte 10 hat einen Grundkörper, der einen Kupplungsring 12 mit Knaggen 14 und Leisten 16 umfasst, welche in bekannter Weise mit entsprechenden Leisten beziehungsweise Knaggen einer Gegenkupplungshälfte eines Schlauchendes in Eingriff gebracht werden können.

In die Kupplungshälfte 10 ist eine Steuervorrichtung zur Einstellung der Durchflussmenge des durch die Kupplungshälfte 10 strömenden Mediums integriert. Zu dieser Steuervorrichtung gehören ein erstes Steuerelement in Form einer Steuerplatte 18, ein zweites Steuerelement in Form eines Steuerschiebers 20, ein Führungselement 22, ein Verstellorgan 24 und ein Konterelement 26.

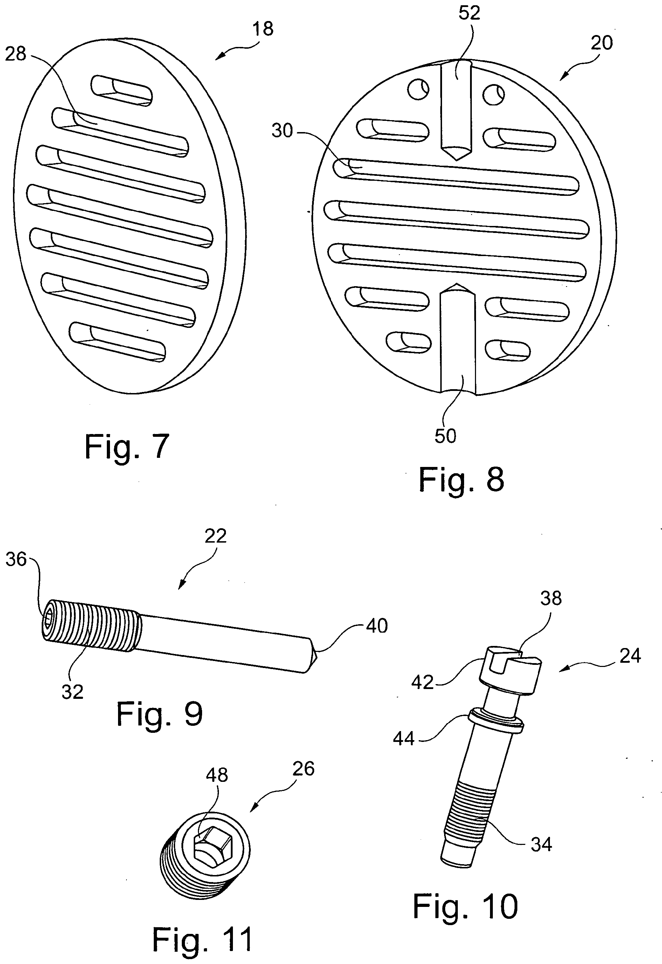

Die in Figur 7 einzeln gezeigte, kreisscheibenförmige Steuerplatte 18 ist fest im vorderen Teil der Kupplungshälfte 10 angebracht, beispielsweise durch Kleben, und dadurch insbesondere gegen eine mögliche Verdrehung gesichert. Sie ist so groß bemessen, dass sie den gesamten freien Durchflussquerschnitt der Kupplungshälfte 10 einnimmt. Die Steuerplatte 18 weist mehrere Durchflussöffnungen 28 auf, die hier als parallel angeordnete Langlöcher ausgebildet sind. Nach dem Einbau der Steuerplatte 18 ist der maximale Durchflussquerschnitt der Kupplung durch den Gesamtquerschnitt der Durchflussöffnungen 28 bestimmt.

Der in Figur 8 einzeln gezeigte, im Wesentlichen ebenfalls kreisscheibenförmige Steuerschieber 20 weist mehrere Steueröffnungen 30 auf. Die Steueröffnungen 30 sind wiederum als parallel verlaufende Langlöcher ausgebildet. Die Steueröffnungen 30 sind im Steuerschieber 20 ähnlich angeordnet wie die Durchflussöffnungen 28 in der Steuerplatte 18, worauf später in der Funktionsbeschreibung 25 noch genauer eingegangen wird.

Außerdem weist der Steuerschieber 20 zwei diametral gegenüberliegende Bohrungen 50, 52 auf, die sich jeweils vom Außenumfang radial einwärts erstrecken. Die zweite Bohrung 52 weist ein (nicht explizit dargestelltes) Innengewinde auf.

Der Steuerschieber 20 ist so in der Kupplungshälfte 10 angeordnet, dass er der Steuerplatte 18 in der Strömungsrichtung des Mediums unmittelbar gegenüberliegt, das heißt es ist in dieser Richtung kein oder nur ein minimaler Abstand zwischen der Steuerplatte 18 und dem Steuerschieber 20 vorhanden. Der Steuerschieber 20 hat jedoch einen etwas geringeren Durchmesser als der freie Durchflussquerschnitt der Kupplungshälfte 10 und ist im Gegensatz zur. Steuerplatte 18 radial verschiebbar gelagert.

Zum Verschieben des Steuerschiebers 20 in radialer Richtung sind das Verstellorgan 24 und das Führungselement 22 vorgesehen, die in der Figur 9 beziehungsweise in 5 der Figur 10 einzeln gezeigt sind. Sowohl das Führungselement 22 als auch das Verstellorgan 24 sind bei der dargestellten Ausführungsform jeweils als längliche Stifte mit einem Gewinde 32 bzw. 34 und einer stirnseitigen Aufnahme 36 beziehungsweise 38 für ein Werkzeug, wie etwa einen Schraubendreher oder Innenmehrkantschlüssel, ausgebildet.

Beim Führungselement 22 ist das Gewinde 32 an dem Ende des Stifts angeordnet, an dem auch die Werkzeugaufnahme 36 vorgesehen ist. Am entgegengesetzten Ende läuft der Stift in einer konusförmige Spitze 40 aus.

Beim Verstellorgan 24 ist das Gewinde 34 in der Nähe desjenigen Stiftendes angeordnet, das der Werkzeugaufnahme 38 entgegengesetzt ist. Außerdem weist 15 das Verstellorgan 24 zwischen dem Gewinde 34 und einem Kopf 42, in dem die Werkzeugaufnahme 38 gebildet ist, einen Bund 44 auf, der ebenso wie der Kopf 42 radial verbreitert ist. Die zwischen dem Bund 44 und dem Kopf 42 gebildete Aussparung dient zur Aufnahme eines oder mehrerer Dichtelemente 46, hier zweier 0-Ringe (siehe Figuren 1 und 4).

Das in Figur 11 einzeln dargestellte Konterelement 26 ist ein kurzer Gewindestift mit einer Öffnung 48, die zwei Funktionen erfüllt. Zum einen ermöglicht die Öffnung 48 im eingebauten Zustand der Steuervorrichtung (siehe Figuren 1 und 4) einem Werkzeug den Zugang zur Aufnahme 38 des Verstellorgans 24, zum anderen ist sie als Aufnahme für einen Innenmehrkantschlüssel ausgebildet, mit dem das Konterelement 26 selbst eingeschraubt werden kann.

Im eingebauten Zustand ist das Führungselement 22 fest in den Grundkörper der Kupplungshälfte 10 eingeschraubt. Hierzu ist im Grundkörper eine Bohrung mit einem passenden Innengewinde vorgesehen. Das freie Ende des Führungselements 22 ragt in die erste Bohrung 50 des Steuerschiebers 20 hinein.

Das Verstellorgan 24 ist drehbar in einer gegenüberliegenden Bohrung des Grundkörpers drehbar um seine Längsachse aufgenommen und stützt sich mit seinem Bund 44 in Längsrichtung auf einem Absatz 54 der Bohrung im Grundkörper ab. Das Gewinde 34 des Verstellorgans 24 steht in Eingriff mit dem Innengewinde der zweiten Bohrung 52 des Steuerschiebers 20.

Damit sich das Verstellorgan 24 nicht (zusammen mit dem Steuerschieber 20) unerwünscht nach außen bewegen kann, ist das Verstellorgan 24 durch das Konterelement 26 gesichert. Das Konterelement 26 ist in derselben Bohrung des Grundkörpers angeordnet wie das Verstellorgan 24, im Gegensatz zu diesem jedoch eingeschraubt, sodass es sich nicht von alleine in axialer Richtung bewegen kann. Das Konterelement 26 ist außerhalb des Verstellorgans 24 so weit in Richtung dessen Kopfs 44 eingeschraubt, dass das Verstellorgan 24 möglichst spielfrei in axialer Richtung gehalten ist, sich jedoch noch mithilfe eines Werkzeugs verdrehen lässt.

Die beiden zwischen dem Bund 42 und dem Kopf 44 angeordneten Dichtelemente 46 dichten die Bohrung im Grundkörper gegenüber dem Verstellorgan 24 ab.

Die Figuren 1 bis 3 zeigen die Kupplungshälfte 10 mit der Steuervorrichtung in einer ersten Stellung, in der keine der Durchflussöffnungen 28 der Steuerplatte 18 mit einer Steueröffnung 30 des Steuerschiebers 20 fluchtet, das heißt die Durchflussöffnungen 28 und die Steueröffnungen 30 überlappen sich auch nicht. In diesem Zustand kann kein Medium durch die Kupplungshälfte 10 strömen, da der gesamte zur Verfügung stehende Durchflussquerschnitt der Kupplungshälfte 10 durch die Steuerplatte 18 und den Steuerschieber 20 blockiert sind. Dies entspricht einem minimalen einstellbaren Durchflussquerschnitt und damit einem maximalen Druckverlust.

Mit einem Werkzeug, das durch die Öffnung 48 des Konterelernents 26 an der Aufnahme 38 angreift, kann das Verstellorgan 24 gedreht werden. Die Drehung des Verstellorgans 24 wird durch die Gewindeverbindung in eine lineare Bewegung des Steuerschiebers 20 in Längsrichtung des Verstellorgans 24 umgewandelt, da sich der Steuerschieber 20 selbst nicht drehen kann; er liegt nämlich einerseits an der Steuerplatte 18 und andererseits an einer Gegenfläche des Grundkörpers der Kupplungshälfte 10 an. Das Führungselement 24 und die erste Bohrung 50 bilden bei der Bewegung des Steuerschiebers 20 eine lineare Führung für den Steuerschieber 20 nach Art eines Gleitlagers.

Durch die Verschiebung des Steuerschiebers 20 werden einige oder alle der Durchflussöffnungen 28 in Überlappung mit den Steueröffnungen 30 gebracht, wobei der Grad der Überlappung vom Ausmaß der Verschiebung des Steuerschiebers 20 abhängt. Nun kann Medium durch die Kupplungshälfte 10 strömen. Die Durchflussmenge variiert mit dem freigegebenen Durchflussquerschnitt, der wiederum durch die Gesamtgröße der Überlappungen von Durchflussöffnungen 28 und Steueröffnungen 30 bestimmt ist.

Die Figuren 3 bis 6 zeigen die Kupplungshälfte 10 mit der Steuervorrichtung in einer zweiten Stellung, in der die größtmögliche Überlappung der Durchflussöffnungen 28 und der Steueröffnungen 30 vorliegt. Dies entspricht einem maximalen einstellbaren Durchflussquerschnitt und damit einem minimalen Druckverlust.

Zwischen dem minimalen und dem maximalen Durchflussquerschnitt können mithilfe der Steuervorrichtung beliebig viele stabile Zwischenpositionen des Steuerschiebers 20 eingestellt werden, die je nach Größe, Form und relativer Anordnung der Durchflussöffnungen 28 und der Steueröffnungen 30 verschieden großen Durchflussquerschnitten entsprechen.

Die Einstellung des Durchflussquerschnitts kann von außen während des laufenden Betriebs, also bei angekuppeltem Schlauch und eingespeistem Medium vorgenommen werden.

Die beschriebene Kupplungshälfte 10 mit der integrierten Steuervorrichtung eignet sich besonders für Wandhydranten, an denen die Kupplungshälfte 10 fest montiert werden kann. Eine weitere mögliche Anwendung der Erfindung ist die Vorjustierung des maximal anliegenden dynamischen Drucks in einem Schlauch oder am Eingang eines Feuerlöschstrahlrohres zum Schutz des Bedieners vor unerwarteten Druckstößen, insbesondere beim Öffnen und im Betrieb.

### Bezugszeichenliste

- 10: Kupplungshälfte
- 12: Kupplungsring
- 14: Knaggen
- 16: Leisten
- 18: erstes Steuerelement (Steuerplatte)
- 20: zweites Steuerelement (Steuerschieber)
- 22: Führungselement
- 24: Verstellorgan
- 26: Konterelement
- 28: Durchflussöffnungen
- 30: Steueröffnungen
- 32: Gewinde des Führungselements
- 34: Gewinde des Verstellorgans
- 36: Werkzeugaufnahme des Führungselements
- 38: Werkzeugaufnahme des Verstellorgans
- 40: Spitze
- 42: Kopf
- 44: Bund
- 46: Dichtelemente
- 48: Öffnung des Konterelements
- 50: erste Bohrung
- 52: zweite Bohrung
- 54: Absatz

## Patentansprüche

1. Feuerwehrschlauchkupplungshälfte (10) zum Anschluss eines Feuerwehrschlauches
1.1 mit einer integrierten Steuervorrichtung zur Einstellung des Durchflussquerschnitts der Feuerwehrschlauchkupplungshälfte (10); **dadurch gekennzeichnet, dass**
1.2 die Steuervorrichtung zur Einstellung des Durchflussquerschnitts der Feuerwehrschlauchkupplungshälfte (10) auf mehrere stabile Zwischenwerte zwischen einem minimalen und einem maximalen Durchflussquerschnitt ausgeführt ist, wobei die Feuerwehrschlauchkupplungshälfte (10), umfassend einen Grundkörper mit einem Kupplungsring (12) mit Knaggen (14) und Leisten (16), zum lösbaren Anschluss einer Gegenkupplungshälfte eines Schlauchendes ausgeführt ist, dass die Steuervorrichtung ein erstes Steuerelement (18), in Form einer Steuerplatte, mit wenigstens einer Durchflussöffnung (28) und ein dem ersten Steuerelement (18) gegenüberliegendes zweites Steuerelement (20), in Form eines Steuerschiebers, mit wenigstens einer Steueröffnung (30) aufweist, dass das zweite Steuerelement (20) relativ zum ersten Steuerelement (18) mittels einer Verstelleinrichtung der Steuervorrichtung so verschiebbar ist, dass sich durch das Verschieben die Lage der Steueröffnung (28) relativ zur Durchflussöffnung (30) ändert, und dass das erste Steuerelement (18) und/oder das zweite Steuerelement (20) mehrere Durchflussöffnungen (28) beziehungsweise Steueröffnungen (30) aufweisen, die als parallel angeordnete Langlöcher ausgebildet sind.

2. Feuerwehrschlauchkupplungshälfte (10) gemäß Anspruch 1, **dadurch gekennzeichnet, dass** die Feuerwehrschlauchkupplungshälfte (10) als Festkupplungshälfte ausgeführt ist.

3. Feuerwehrschlauchkupplungshälfte (10) nach Anspruch 1 oder 2, **dadurch gekennzeichnet, dass** die Verstelleinrichtung eine im Wesentlichen lineare Führung für das zweite Steuerelement (20) aufweist.

4. Feuerwehrschlauchkupplungshälfte (10) nach Anspruch 3, **dadurch gekennzeichnet, dass** die Führung einen feststehenden Stift (22) aufweist, der in eine erste Bohrung (50) des zweiten Steuerelements (20) hineinragt und mit dieser ein Gleitlager bildet.

5. Feuerwehrschlauchkupplungshälfte (10) nach einem der Ansprüche 1 bis 4, **dadurch gekennzeichnet, dass** die Verstelleinrichtung ein von außen zugängliches Verstellorgan (24) aufweist, das in Wirkverbindung mit dem zweiten Steuerelement (20) steht.

6. Feuerwehrschlauchkupplungshälfte (10) nach Anspruch 5, **dadurch gekennzeichnet, dass** das Verstellorgan (24) ein drehbar gelagerter Stift mit einem Gewinde (34) ist, das in Eingriff mit einem Gewinde des zweiten Steuerelements (20) steht, wobei insbesondere das Gewinde des zweiten Steuerelements (20) in einer zweiten Bohrung (52) des zweiten Steuerelements (20) gebildet ist, und sich insbesondere die erste Bohrung (50) und die zweite Bohrung (52) des zweiten Steuerelements (20) diametral gegenüberliegen.

7. Feuerwehrschlauchkupplungshälfte (10) nach einem der Ansprüche 5 oder 6, **dadurch gekennzeichnet, dass** das Verstellorgan (24) einen radial abstehenden Bund (42) aufweist, mit dem sich das Verstellorgan (24) an der Feuerwehrschlauchkupplungshälfte (10) axial abstützt.

8. Feuerwehrschlauchkupplungshälfte (10) nach einem der Ansprüche 5 bis 7, **dadurch gekennzeichnet, dass** das Verstellorgan (24) durch ein Konterelement (26) der Verstelleinrichtung an der Feuerwehrschlauchkupplungshälfte (10) gesichert ist, wobei insbesondere das Konterelement (26) eine Öffnung (48) aufweist, durch die das Verstellorgan (24) für ein Werkzeug zum Drehen des Verstellorgans (24) zugänglich ist.

9. Feuerwehrschlauchkupplungshälfte (10) nach Anspruch 8, **dadurch gekennzeichnet, dass** das Konterelement (26) ein Gewinde aufweist und die Öffnung (48) des Konterelements (26) als Aufnahme für einen Innenmehrkantschlüssel ausgebildet ist.

10. Stationäre Feuerlöschanlage mit einer Feuerwehrschlauchkupplungshälfte (10) gemäß einem der Ansprüche 1 bis 9 zum Anschluss eines Feuerwehrschlauches.

11. Wandhydrant mit einer Feuerwehrschlauchkupplungshälfte (10) gemäß einem der Ansprüche 1 bis 9 zum Anschluss eines Feuerwehrschlauches.

12. Eingang eines Feuerlöschstrahlrohres oder Feuerwehrschlauch mit einer Feuerwehrschlauchkupplungshälfte (10) gemäß einem der Ansprüche 1 bis 9.

## Claims

1. A fire hose coupling half (10) for connecting a fire hose,
1.1 comprising an integrated control apparatus for setting the flow cross-section of the fire hose coupling part (10);
**characterized in that**
1.2 the control apparatus is formed between a minimal and a maximum flow cross-section for setting the flow cross-section of the fire hose coupling half (10) to multiple stable intermediate values, wherein the fire hose coupling half (10), comprising a base body with a coupling ring (12) with cams (14) and strips (16), is formed for the releasable connection of a mating coupling half of a hose end, that the control apparatus comprises a first control element (18), in form of a control plate, with at least one flow opening (28) and a second control element (20), in form of a control slide, which is opposite the first control element (18) and comprises at least one control opening (30), that the second control element (20) is displaceable relative to the first control element (18) by means of an adjusting device of the control apparatus in such a way that the position of the control opening (28) changes relative to the flow opening (30) by the displacement, and that the first control element (18) and/or the second control element (20) comprise several flow openings (28) or control openings (30) which are formed as oblong holes arranged in parallel.

2. A fire hose coupling half (10) according to claim 1, **characterized in that** the fire hose coupling half (10) is formed as a fixed coupling half.

3. A fire hose coupling half (10) according to claim 1 or 2, **characterized in that** the adjusting device comprises a substantially linear guide for the second control element (20).

4. A fire hose coupling half (10) according to claim 3, **characterized in that** the guide comprises a fixed pin (22) which protrudes into a first borehole (50) of the second control element (20) and forms a sliding bearing therewith.

5. A fire hose coupling half (10) according to one of the claims 1 to 4, **characterized in that** the adjusting device comprises an externally accessible adjusting member (24) which is in operative connection with the second control element (20).

6. A fire hose coupling half (10) according to claim 5, **characterized in that** the adjusting member (24) is a rotatably mounted pin with a thread (34), which is in engagement with a thread of the second control element (20), wherein especially the thread of the second control element (20) is formed in a second borehole (52) of the second control element (20), and the first borehole (50) and the second borehole (52) of the second control element (20) in particular are disposed diametrically opposite each other.

7. A fire hose coupling half (10) according to one of the claims 5 or 6, **characterized in that** the adjusting member (24) comprises a radially protruding collar (42), with which the adjusting member (24) axially rests on the fire hose coupling half (10).

8. A fire hose coupling half (10) according to one of the claims 5 to 7, **characterized in that** the adjusting member (24) is secured on the fire hose coupling half (10) by a counter-element (26) of the adjusting device, wherein especially the counter-element (26) comprises an opening (48) through which the adjusting member (24) is accessible for a tool for rotating the adjusting member (24).

9. A fire hose coupling half (10) according to claim 8, **characterized in that** the counter-element (26) comprises a thread and the opening (48) of the counter-element (26) is formed as a receiver for a polygonal socket wrench.

10. A stationary fire extinguishing system, comprising a fire hose coupling half (10) according to one of the claims 1 to 9 for connecting a fire hose.

11. A wall hydrant, comprising a fire hose coupling half (10) according to one of the claims 1 to 9 for connecting a fire hose.

12. An inlet of a fire-extinguishing jet pipe or fire hose, comprising a fire hose coupling half (10) according to one of the claims 1 to 9.

## Revendications

1. Demi-accouplement de tuyau d'incendie (10) pour le raccordement d'un tuyau d'incendie,
1.1 comportant un dispositif de commande intégré pour régler la section de passage du demi-accouplement de tuyau d'incendie (10) ;
caractérisé en ce
1.2 que le dispositif de commande est conçu pour régler la section de passage du demi-accouplement de tuyau d'incendie (10) sur plusieurs valeurs intermédiaires stables entre une section de passage minimale et une section de passage maximale, lequel demi-accouplement de tuyau d'incendie (10), comprenant un corps de base avec une bague d'accouplement (12) avec des taquets (14) et des nervures (16), est conçu pour le raccordement amovible d'un demi-accouplement complémentaire d'une extrémité de tuyau,
que le dispositif de commande présente un premier élément de commande (18), sous la forme d'une plaque de commande, avec au moins une ouverture de passage (28) et un deuxième élément de commande (20), opposé au premier élément de commande (18), sous la forme d'un tiroir de commande, avec au moins une ouverture de commande (30), que le deuxième élément de commande (20) est réglable par rapport au premier élément de commande (18) au moyen d'un dispositif de réglage du dispositif de commande, de telle sorte que le réglage entraîne un changement de la position de l'ouverture de commande (28) par rapport à l'ouverture de passage (30), et que le premier élément de commande (18) et/ou le deuxième élément de commande (20) présentent plusieurs ouvertures de passage (28), respectivement ouvertures de commande (30), qui sont réalisées sous la forme de trous oblongs disposés parallèlement.

2. Demi-accouplement de tuyau d'incendie (10) selon la revendication 1, **caractérisé en ce que** le demi-accouplement de tuyau d'incendie (10) est réalisé sous la forme d'un demi-accouplement fixe.

3. Demi-accouplement de tuyau d'incendie (10) selon la revendication 1 ou 2, **caractérisé en ce que** le dispositif de réglage présente un guidage sensiblement linéaire pour le deuxième élément de commande (20).

4. Demi-accouplement de tuyau d'incendie (10) selon la revendication 3, **caractérisé en ce que** le guidage présente une broche fixe (22) qui fait saillie dans un premier perçage (50) du deuxième élément de commande (20) et forme avec celui-ci un palier à glissement.

5. Demi-accouplement de tuyau d'incendie (10) selon l'une des revendications 1 à 4, **caractérisé en ce que** le dispositif de réglage présente un organe de réglage (24) accessible de l'extérieur, qui est en liaison fonctionnelle avec le deuxième élément de commande (20).

6. Demi-accouplement de tuyau d'incendie (10) selon la revendication 5, **caractérisé en ce que** l'organe de réglage (24) est une broche montée tournante comportant un filetage (34) qui est en prise avec un filetage du deuxième élément de commande (20), le filetage du deuxième élément de commande (20) étant en particulier formé dans un deuxième perçage (52) du deuxième élément de commande (20), et le premier perçage (50) et le deuxième perçage (52) du deuxième élément de commande (20) étant en particulier diamétralement opposés.

7. Demi-accouplement de tuyau d'incendie (10) selon l'une des revendications 5 ou 6, **caractérisé en ce que** l'organe de réglage (24) présente une embase (42) en saillie radiale, par laquelle l'organe de réglage (24) s'appuie axialement sur le demi-accouplement de tuyau d'incendie (10).

8. Demi-accouplement de tuyau d'incendie (10) selon l'une des revendications 5 à 7, **caractérisé en ce que** l'organe de réglage (24) est fixé sur le demi-accouplement de tuyau d'incendie (10) par un élément de blocage (26) du dispositif de réglage, l'élément de blocage (26) présentant en particulier une ouverture (48) à travers laquelle l'organe de réglage (24) est accessible à un outil pour faire tourner l'organe de réglage (24).

9. Demi-accouplement de tuyau d'incendie (10) selon la revendication 8, **caractérisé en ce que** l'élément de blocage (26) présente un filetage et l'ouverture (48) de l'élément de blocage (26) est réalisée sous la forme d'un logement pour une clé pour vis à tête polygonale creuse.

10. Système d'extinction d'incendie stationnaire équipé d'un demi-accouplement de tuyau d'incendie (10) selon l'une des revendications 1 à 9 pour le raccordement d'un tuyau d'incendie.

11. Robinet d'incendie armé équipé d'un demi-accouplement de tuyau d'incendie (10) selon l'une des revendications 1 à 9 pour le raccordement d'un tuyau d'incendie.

12. Entrée d'une lance d'incendie ou tuyau d'incendie équipé d'un demi-accouplement de tuyau d'incendie (10) selon l'une des revendications 1 à 9.
